(19) Europäisches Patentamt / European Patent Office / Office européen des brevets

(11) **EP 3 087 149 B1**

(12) **EUROPEAN PATENT SPECIFICATION**

(45) Date of publication and mention
of the grant of the patent:
**13.05.2020 Bulletin 2020/20**

(21) Application number: **14824004.7**

(22) Date of filing: **23.12.2014**

(51) Int Cl.:
*C09D 167/08* (2006.01)     *C09D 5/02* (2006.01)

(86) International application number:
**PCT/EP2014/079231**

(87) International publication number:
**WO 2015/097241 (02.07.2015 Gazette 2015/26)**

(54) **COMPOSITION CONTAINING WATER-INSOLUBLE PARTICLES AND A POLYOL POLY(HYDROXY FATTY ACID) ESTER EMULSIFIER**

ZUSAMMENSETZUNG MIT WASSERUNLÖSLICHEN PARTIKEL UND EMULGATOR UND VERFAHREN ZUR HERSTELLUNG

COMPOSITION CONTENANT DES PARTICULES INSOLUBLES DANS L'EAU, UN ÉMULSIFIANT ET PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2013 EP 13199473**

(43) Date of publication of application:
**02.11.2016 Bulletin 2016/44**

(73) Proprietor: **Palsgaard A/S**
**7130 Juelsminde (DK)**

(72) Inventor: **NORN, Viggo Creemers**
**DK-7140 Stouby (DK)**

(74) Representative: **Guardian**
**IP Consulting I/S**
**Diplomvej, Building 381**
**2800 Kgs. Lyngby (DK)**

(56) References cited:
**DE-A1-102008 007 713     US-A1- 2009 118 397**

## Description

### FIELD OF THE INVENTION

The present invention pertains to compositions containing a first population of water-insoluble particles and a polyol poly(hydroxy fatty acid) ester emulsifier, such as for example coatings or paint compositions containing inorganic pigment dispersed in an organic binder and/or organic solvent. The present invention furthermore relates to methods of producing such compositions and various uses.

### BACKGROUND

Water-insoluble particles play an important role in coatings and paints, both as pigments providing color and as functional components providing strength, electric conductivity or other characteristics to the coating/paint.

However, water-insoluble particles present significant challenges with respect to the stability and rheological properties of coatings/paints. Effective dispersion of the water-insoluble particles in the medium of the paint is important to obtain the full benefit of the water-insoluble particles.

WO 2010/042,462 A1 discloses a non-ionic surfactant blend which e.g. may be used paints and pigment suspensions.

US 5,977,211 discloses a ball pen and an emulsion-type erasable ink. The ink uses water as continuous phase in which latex particles and pigments are dispersed. The ink contains a lubrication system which may contain small amounts of polyglycerin polyricinolate.

DE 10 2008 007 713 A1 discloses examples of low VOC pigment paste or paint system which comprises polyether fatty acid esters and pigments.

US2009118397 A1 discloses aqueous coating compositions, such as paints, containing a film-forming latex polymer and a reactive surfactant. The reactive surfactant, a polyglycerol ester or ether of an unsaturated fatty acid, reduces or eliminates the need for traditional water-soluble additives that lower the water resistance of the dry coating. Additionally, the reactive surfactants of the invention are capable of oxidative cross-linking during the curing process, forming a dry film that is more durable and water-resistant than traditional latex paint composition

### SUMMARY OF THE INVENTION

The present inventor has discovered that polyol poly(hydroxy fatty acid) ester emulsifiers provide a surprisingly large reduction yield value (also referred to a yield point or yield value) of compositions containing a first population of water-US2009118397 A1 discloses aqueous coating compositions, such as paints, containing a film-forming latex polymer and a reactive surfactant. The reactive surfactant, a polyglycerol ester or ether of an unsaturated fatty acid, reduces or eliminates the need for traditional water-soluble additives that lower the water resistance of the dry coating. Additionally, the reactive surfactants of the invention are capable of oxidative cross-linking during the curing process, forming a dry film that is more durable and water-resistant than traditional latex paint composition.

### SUMMARY OF THE INVENTION

The present inventor has discovered that polyol poly(hydroxy fatty acid) ester emulsifiers provide a surprisingly large reduction yield value (also referred to a yield point or yield value) of compositions containing a first population of water-insoluble particles suspended in organic liquids, such as e.g. non-aqueous coatings, non-aqueous paints, non-aqueous particle suspensions, or compositions exhibiting Bingham plastic fluid properties. This discovery opens up for new types of coatings/paints/compositions which are more convenient to use, and which may contain a higher pigment concentration or even smaller size pigments than traditionally used yielding better coatings.

Thus, a first aspect of the invention pertains to a liquid composition comprising a lipophilic continuous liquid phase, a total amount of a first population of water-insoluble particles of at least 1% (w/w) and a polyol poly(hydroxy fatty acid) ester emulsifier (pphe emulsifier), said water-insoluble particles are dispersed in the lipophilic liquid phase.

The first population of water-insoluble particles preferably have a hydrophilic surface with a contact angle relative to a droplet of water of less than 90 degrees (determined according to ASTM standard D7334 - 08 (2013) - see more details below).

The inventor has also found that the presence of pphe emulsifiers reduces the shear stress in the liquid or paste-like compositions containing a first population of water-insoluble particles and a lipophilic, continuous liquid phase.

Another aspect of the invention pertains to a method of producing the liquid composition containing water-insoluble particles, which method comprises the steps of

a) providing the ingredients of the liquid composition including a pphe emulsifier, a first population of water-insoluble particles and additional ingredients including a lipophilic liquid phase, and

b) combining the pphe emulsifier, the first population of water-insoluble particles and the additional ingredients, so as to form the liquid composition containing water-insoluble particles.

Another aspect of the invention pertains to a paint or coating composition in the form of an emulsion comprising a continuous aqueous phase and a population of type 1 droplets containing:

- a lipophilic liquid phase comprising a binder,
- pphe emulsifier, and
- total amount of a first population of water-insoluble particles of at least 1% (w/w).

A further aspect of the invention relates to a dry composition in the form of a dry powder or dry pellets, said dry composition comprising a first population of water-insoluble particles of at least 1% (w/w), and a polyol poly(hydroxy fatty acid) ester emulsifier (pphe emulsifier), and wherein at least a portion of said pphe emulsifier is located on the surface of at least some of the water-insoluble particles of the first population.

Yet an aspect of the invention relates to various uses of the pphe emulsifier.

## BRIEF DESCRIPTION OF THE FIGURES

Figure 1 shows the general formula of an example of a pphe molecule.

Figure 2 shows the relation between yield value, pigment concentration and emulsifier concentration in a test paint based on cold pressed linseed oil and $TiO_2$.

Figure 3 shows the relation between yield value, pigment concentration and emulsifier concentration in a test paint based on boiled linseed oil and $TiO_2$.

Figure 4 shows the relation between plastic viscosity, pigment concentration and emulsifier concentration in a test paint based on cold pressed linseed oil and $TiO_2$.

Figure 5 shows the relation between plastic viscosity, pigment concentration and emulsifier concentration in a test paint based on boiled linseed oil and $TiO_2$.

Figure 6 shows the relation between yield value, emulsifier concentration and pigment concentration in a test paint based on cold pressed linseed oil and $TiO_2$.

Figure 7 shows the relation between yield value, emulsifier concentration and pigment concentration in a test paint based on boiled linseed oil and $TiO_2$.

Figure 8 shows the relation between plastic viscosity, emulsifier concentration and pigment concentration in a test paint based on cold pressed linseed oil and $TiO_2$.

Figure 9 shows the relation between plastic viscosity, emulsifier concentration and pigment concentration in a test paint based on boiled linseed oil and $TiO_2$.

## DETAILED DESCRIPTION OF THE INVENTION

Thus, an aspect of the invention pertains to a liquid composition comprising a lipophilic continuous liquid phase, a total amount of a first population of water-insoluble particles of at least 1% (w/w) and a polyol poly(hydroxy fatty acid) ester emulsifier (pphe emulsifier), said water-insoluble particles are dispersed in the lipophilic liquid phase.

A further aspect the invention pertains to a paint or coating composition in the form of an emulsion comprising a continuous aqueous phase and a population of type 1 droplets containing:

- a lipophilic liquid phase comprising a binder,
- pphe emulsifier, and
- total amount of a first population of water-insoluble particles of at least 1% (w/w).

In a further aspect the invention pertains to a dry composition in the form of a dry powder or dry pellets, said dry composition comprising a first population of water-insoluble particles of at least 1% (w/w), and a polyol poly(hydroxy fatty acid) ester emulsifier (pphe emulsifier), and wherein least a portion of said pphe emulsifier is located on the surface of at least some of the water-insoluble particles of the first population.

In the context of the present invention, the term "water-insoluble particles" relates to particles that have a solubility in deionised water of at most 0.5% (w/w) at 25 degrees C. For example, the water-insoluble particles may have a solubility in deionised water of at most 0.1% (w/w) at 25 degrees C, or even lower.

It is furthermore preferred that the water-insoluble particles are insoluble in organic solvent such as hexane. Thus, the water-insoluble particles preferably have a solubility in hexane of at most 0.5% (w/w) at 25 degrees C, e.g. even lower.

The composition contains at least a first population of water-insoluble particles, and it may furthermore contain further populations of water-insoluble particles, such as e.g. a second population, and even a third population or a fourth population.

In the context of the present invention, a "population of particles" relates to a group of particles having substantially the same chemical composition and substantially the same surface characteristics. For example, a first population of water-insoluble particles could be $TiO_2$-particles and a second population of water-insoluble particles could be ZnO-particles.

The further populations of water-insoluble particles may share some characteristics of the first population or they may be completely different.

In some embodiments of the invention, the first population of water-insoluble particles comprises at least 50% (w/w) of the total amount of water-insoluble particles. For examples, the first population of water-insoluble particles may comprise at least 70% (w/w) of the total amount of water-insoluble particles. The first population of water-insoluble particles may comprise at least 80% (w/w) of the total amount of water-insoluble particles. Alternatively, the first population of water-insoluble particles may comprise at least 90% (w/w) of the total amount of water-insoluble particles.

In some preferred embodiments of the invention, the first population of water-insoluble particles comprises at least 95% (w/w) of the total amount of water-insoluble particles, such as substantially 100% (w/w).

The first population of water-insoluble particles may comprise a substantial amount of elemental metal(s) and/or elemental metalloid(s). The term "metalloid" pertains to silicon, germanium, arsenic, antimony, and/or tellurium.

In some preferred embodiments of the invention the first population of water-insoluble particles comprise, or even consist of, inorganic material.

In the context of the present invention, the phrase "Y and/or X" means "Y" or "X" or "Y and X". Along the same line of logic, the phrase "$X_1$, $X_2$,..., $X_{i-1}$, and/or $X_i$" means "$X_1$" or "$X_2$" or... or "$X_{i-1}$" or "$X_i$" or any combination of the components : $X_1$, $X_2$,...$X_{i-1}$, and $X_i$.

In some preferred embodiments of the invention, the first population of water-insoluble particles contain a total amount of elemental metal and metalloid of at least 5% (w/w) relative to the total weight of the first population of water-insoluble particles. For example, the first population of water-insoluble particles may contain a total amount of elemental metal and metalloid of at least 10% (w/w) relative to the total weight of the first population of water-insoluble particles. The first population of water-insoluble particles may e.g. contain a total amount of elemental metal and metalloid of at least 15% (w/w) relative to the total weight of the first population of water-insoluble particles. Alternatively, the first population of water-insoluble particles may e.g. contain a total amount of elemental metal and metalloid of at least 20% (w/w) relative to the total weight of the first population of water-insoluble particles.

Higher amount of elemental metal and metalloid may be preferred, thus, the first population of water-insoluble particles may contain a total amount of elemental metal and metalloid of at least 25% (w/w) relative to the total weight of the first population of water-insoluble particles. The first population of water-insoluble particles may e.g. contain a total amount of elemental metal and metalloid of at least 30% (w/w) relative to the total weight of the first population of water-insoluble particles. Alternatively, the first population of water-insoluble particles may e.g. contain a total amount of elemental metal and metalloid of at least 35% (w/w) relative to the total weight of the first population of water-insoluble particles.

The first population of water-insoluble particles may contain a total amount of elemental metal and metalloid in the range of 5-100% (w/w) relative to the total weight of the first population of water-insoluble particles. For example, the first population of water-insoluble particles may contain a total amount of elemental metal and metalloid in the range of 10- 90% (w/w) relative to the total weight of the first population of water-insoluble particles. The first population of water-insoluble particles may e.g. contain a total amount of elemental metal and metalloid in the range of 15-85% (w/w) relative to the total weight of the first population of water-insoluble particles. Alternatively, the first population of water-insoluble particles may e.g. contain a total amount of elemental metal and metalloid in the range of 20-80% (w/w) relative to the total weight of the first population of water-insoluble particles.

For example, the first population of water-insoluble particles may contain a total amount of elemental metal and metalloid in the range of 25-75% (w/w) relative to the total weight of the first population of water-insoluble particles. The first population of water-insoluble particles may e.g. contain a total amount of elemental metal and metalloid in the range of 30-70% (w/w) relative to the total weight of the first population of water-insoluble particles. Alternatively, the first population of water-insoluble particles may e.g. contain a total amount of elemental metal and metalloid in the range of 35-65% (w/w) relative to the total weight of the first population of water-insoluble particles.

The inorganic material may for example comprise, or even consist of, one or more materials selected from the group consisting of metals, metalloids, metal oxides, metalloid oxides, ceramics, metal salts, metalloid salts and mixtures thereof.

The inorganic material may e.g. contain on or more materials, including a material selected from the group consisting of $TiO_2$, $ZnO$, $ZnSO_4$, $PbSO_4$, Antimony Oxide, $ZrSiO4$, $CaCO_3$, silica, quarts, $SiO_2$, $SiO_4$, $Al_2O_3$ (aluminium oxides), precipitated silica, fumed silica, silicates, aluminium silicates (e.g. caolin), Ca metasilicate, Ca Silicate, Al K silicate, Mg silicate, Mg Al silicate, carbon black, graphite, black iron oxide, copper black, chrome black, iron oxides such as $FeO$, $Fe_3O_4$ and $Fe_2O_3$, and mixtures thereof.

In some embodiments of the invention the first population of water-insoluble particles comprise, or even consist of, a combination of organic material and inorganic material. The first population of water-insoluble particles may for example contain a core of inorganic material coated with organic material or a core of organic material coated with inorganic material.

In some preferred embodiments of the invention the first population of water-insoluble particles comprise, or even consist of, one or more pigment(s).

White pigments may for example comprise, or even consist of, $ZnO$, $ZnSO_4$, $TiO_2$, $CaCO_3$ and mixtures of these.

Black pigments may for example comprise, or even consist of, Carbon black, graphite, black iron oxide, Copper black, Chrome black and mixtures of these.

Red pigments may for example comprise, or even consist of, $Fe_2O_3$, Cadmium Red and mixtures of these.

Blue pigments may for example comprise, or even consist of, ultramarine blue, Prussian blue, Cerulean Blue, Cobalt Blue and mixtures of these.

Green pigments may for example comprise, or even consist of, $Cr_2O_3$ (Chromium Green Oxide), Viridian, Cobalt Green and mixtures of these.

Other useful inorganic pigments can be found in Lewis ("Pigment Handbook, Volume 1-3", 2nd edition, Edited by Peter A. Lewis, 1988; John Wiley & Son).

The first population of water-insoluble particles may e.g. be solid particles. For example, the first population of water-insoluble particles may be crystalline or at least partly crystalline. Alternatively, the first population of water-insoluble particles may solid and amorphous.

In some embodiments of the invention, the first population of water-insoluble particles may comprise, or even consist of, metallo-organic material, i.e. a material containing central metal atoms surrounded by nonmetal atoms or groups of atoms, called ligands, joined to the individual atoms by chemical bonds. Useful examples of such particles are e.g. copper phthalocyanines, monoazo pigments and similar pigments.

The particle size of the first population of water-insoluble particles can vary according the specific application. In some embodiments of the invention the first population of water-insoluble particles have an average particle size of at most 50 micrometer. For example, the first population of water-insoluble particles may have an average particle size of at most 30 micrometer. Preferably, the first population of water-insoluble particles have an average particle size at most 20 micrometer.

Even smaller particle sizes may be used. Thus, in some embodiments of the invention the first population of water-insoluble particles have an average particle size of at most 10 micrometer. For example, the first population of water-insoluble particles may have an average particle size of at most 5 micrometer. Preferably, the first population of water-insoluble particles have an average particle size of at most 1 micrometer.

Water-insoluble particles having a very small particle size have traditionally been perceived as undesirable in paint compositions, as the small particle size of the water-insoluble particles normally result in a dramatic increase in the viscosity of the resulting products. The latter comes from small particle size and the often polar nature of the pigments which induces strong attraction forces causing the particles to agglomerates or aggregates into bigger particles. However, the present invention reduces the viscosity increase provided by very small water-insoluble particles in liquid and paste-like compositions and therefore allows for the use very small water-insoluble particles in coating- or paint-related compositions.

In some preferred embodiments of the invention, at least 90% (w/w) of the first population of water-insoluble particles have a particle size in the range of 0.001-5 micrometer. For example, at least 90% (w/w) of the first population of water-insoluble particles may have a particle size in the range of 0.001-10 micrometer. Preferably, at least 90% (w/w) of the first population of water-insoluble particles have a particle size in the range of 0.001-5 micrometer.

Even smaller particles may be used, thus in some preferred embodiments of the invention, at least 90% (w/w) of the first population of water-insoluble particles have a particle size in the range of 0.001-2 micrometer. For example, at least 90% (w/w) of the first population of water-insoluble particles may have a particle size in the range of 0.005-1 micrometer. Preferably, at least 90% (w/w) of the first population of water-insoluble particles have a particle size in the range of 0.01-0.5 micrometer.

For some applications of the present invention the first population of water-insoluble particles are predominantly nano-particles, thus in some preferred embodiments of the invention, at least 90% (w/w) of the first population of water-insoluble particles have a particle size in the range of 0.001-0.5 micrometer. For example, at least 90% (w/w) of the first population of water-insoluble particles may have a particle size in the range of 0.005-0.2 micrometer. Preferably, at least 90% (w/w) of the first population of water-insoluble particles have a particle size in the range of 0.01-0.1 micrometer.

In the context of the present invention, the term "particle size" relates to the hydrodynamic diameter of the water-insoluble particles and is preferably measured using laser diffraction analysis.

In some preferred embodiments, the surface of the first population of water-insoluble particles is hydrophilic. In the context of the present invention, the surface of particles is deemed hydrophilic if the particles have a contact angle relative to a droplet of demineralized water of less than 90 degrees.

The contact angle is measured on a compressed bed of purified, dry particles by Advancing Contact Angle Measurement according to ASTM standard D7334 - 08 (2013) and at a temperature of 25 degrees C.

The present inventor has observed that that the present pphe emulsifier acts as a very efficient wetting agent for wetting water-insoluble particles having a hydrophilic surface with a lipophilic liquid phase. Efficient wetting is desirable as it reduces the formation of aggregates of the water-insoluble particles within the lipophilic liquid phase and facilitates a good dispersion of the particles. Efficient wetting furthermore reduces the risk of entrapment of air pockets within particle aggregates.

Preferably the contact angle of the water-insoluble particles is at most 80 degrees. For example, the contact angle may be at most 70 degrees, and preferably even lower such as at most 60 degrees or at most 50 degrees. It is even more preferred that the contact angle is at most 45 degrees. The contact angle may e.g. be at most 30 degrees.

For example, the first population of water-insoluble particles may have a contact angle of at most 25 degrees. Alternatively, the contact angle may be at most 20 degrees, such as at most 10 degrees, which is characteristic for water-insoluble particles having a highly hydrophilic surface.

In some embodiments of the invention, the total amount of hydrophilic, water-insoluble particles comprise at least 50% (w/w) of the total amount of water-insoluble particles. For examples, the total amount of hydrophilic, water-insoluble particles may comprise at least 70% (w/w) of the total amount of water-insoluble particles. The total amount of hydrophilic, water-insoluble particles may comprise at least 80% (w/w) of the total amount of water-insoluble particles. Alternatively, the total amount of hydrophilic, water-insoluble particles may comprise at least 90% (w/w) of the total amount of water-insoluble particles.

In some preferred embodiments of the invention, the total amount of hydrophilic, water-insoluble particles comprises at least 95% (w/w) of the total amount of water-insoluble particles, such as substantially 100% (w/w).

In some embodiments of the invention, the composition comprises a first population of water-insoluble particles which is hydrophilic and a further population of water-insoluble particles which is hydrophobic.

In the context of the present invention, the surface of particles is deemed hydrophobic if the particles have a contact angle relative to a droplet of demineralized water of at least 90 degrees.

As mentioned above, the total amount of the first population of water-insoluble particles is preferably at least 1% (w/w) relative to the total weight of the composition. However, higher concentrations may be preferred, thus in in some preferred embodiments of the invention, the total amount of the first population of water-insoluble particles of the composition is at least 5% (w/w) relative to the total weight of the composition. The total amount of the first population of water-insoluble particles may e.g. be at least 10% (w/w) relative to the total weight of the composition. Alternatively, the total amount of the first population of water-insoluble particles may be at least 20% (w/w) relative to the total weight of the composition. For example, the total amount of the first population of water-insoluble particles of the composition may be at least 30% (w/w) relative to the total weight of the composition.

The inventor has also found that the pphe emulsifier is effective in compositions having a relatively high concentration of the first population of water-insoluble particles. This discovery allows for highly concentrated compositions having much lower yield values than one previously would have expected. This opens up for highly concentrated pigment bases which can be used for blending in paint and polymers like alkyds and thus colouring the formulations.

Thus, in some preferred embodiments of the invention, the total amount of the first population of water-insoluble particles of the composition is at least 50% (w/w) relative to the total weight of the composition. The total amount of the first population of water-insoluble particles may e.g. be at least 60% (w/w) relative to the total weight of the composition. Alternatively, the total amount of the first population of water-insoluble particles may be at least 70% (w/w) relative to the total weight of the composition. For example, the total amount of the first population of water-insoluble particles in the composition may be at least 80% (w/w) relative to the total weight of the composition.

In some preferred embodiments of the invention, the total amount of the first population of water-insoluble particles of the composition is in the range of 1-90 % (w/w) relative to the total weight of the composition. The total amount of the first population of water-insoluble particles may e.g. be in the range of 2-50% (w/w) relative to the total weight of the composition. Alternatively, the total amount of the first population of water-insoluble particles may in the range of 5-40% (w/w) relative to the total weight of the composition. For example, the total amount of the first population of water-insoluble particles in the composition may be in the range of 10-30% (w/w) relative to the total weight of the composition.

In other preferred embodiments of the invention, the total amount of the first population of water-insoluble particles of the composition is in the range of 30-90 % (w/w) relative to the total weight of the composition. The total amount of the first population of water-insoluble particles may e.g. be in the range of 40-85% (w/w) relative to the total weight of the composition. Alternatively, the total amount of the first population of water-insoluble particles may in the range of 50-80% (w/w) relative to the total weight of the composition. For example, the total amount of the first population of water-insoluble particles in the composition may be in the range of 55-75% (w/w) relative to the total weight of the composition.

In the context of the present invention the term "polyol poly(hydroxy fatty acid) ester emulsifier" or "pphe emulsifier" relates to polyol poly(hydroxy fatty acid) esters which are soluble or partly soluble in lipophilic solvent such as vegetable oils like sunflower oil, aromatic solvent like xylene and/or alcohols such as 2-propanol, and have emulsifying properties.

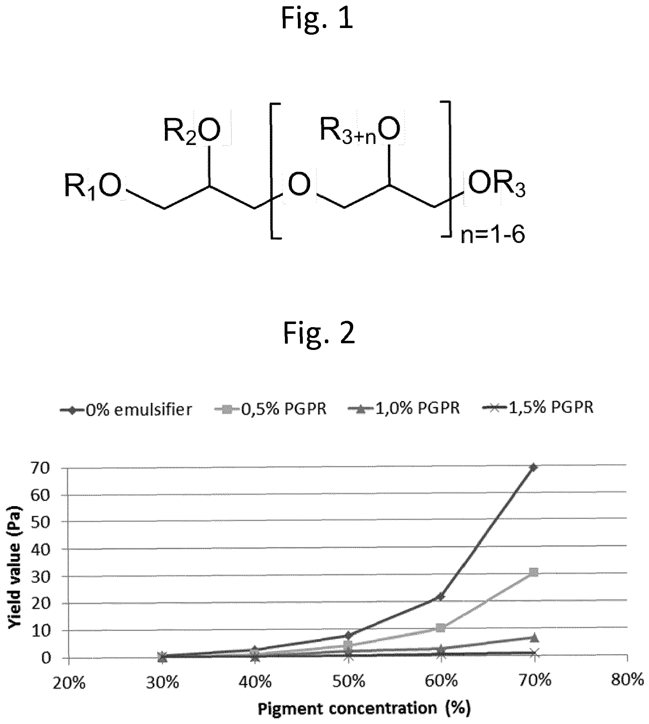

A schematic embodiment of a polyol poly(hydroxy fatty acid) ester is shown in Fig. 1, where the backbone is a poly(glycerol) containing from 2-7 linked glycerol molecules and the groups $R_1$, $R_2$, $R_3$ and $R_{3+n}$ are, independently, either hydrogen or poly(hydroxy fatty acid), such as e.g. polyricinoleate, which are attached to the backbone by esterification. It should be noted that a polyol poly(hydroxy fatty acid) ester can contain more than one poly(hydroxy fatty acid), such as e.g. two poly(hydroxy fatty acid)s, three poly(hydroxy fatty acid)s, four poly(hydroxy fatty acid)s or even more.

The pphe emulsifier used in the present invention may contain a single species of polyol poly(hydroxy fatty acid) ester or a mixture of several of different species of polyol poly(hydroxy fatty acid) esters. The latter is typically the case when the pphe emulsifier is prepared from sources such as polyglycerol polyricinoleate, which is prepared from glycerol and ricinoleic acid.

The source(s) of pphe emulsifier may additionally contain impurities, such as byproducts from the synthesis of the pphe or impurities present in starting materials of the synthesis. The composition of the invention will therefore typically contain minor amounts of impurities, such as e.g. free or esterified fatty acids.

The pphe emulsifier source preferably contains at most 50% (w/w) impurities, i.e. non-pphe molecules. For example, the pphe emulsifier source may contain at most 30% (w/w) impurities. The pphe emulsifier source may e.g. contain at most 20% (w/w) impurities. Alternatively, pphe emulsifier source may contain at most 10% (w/w) impurities. For example, the pphe emulsifier source preferably contains at most 5% (w/w) impurities.

In the context of the present invention, the term "polyol" relates to an organic molecule containing at least three hydroxyl groups. Preferably, the polyol has a carbon-backbone or linked sections of carbon-backbone to which the hydroxyl groups are bound.

The polyol may e.g. be a monomeric polyol. Examples of useful monomeric polyols are e.g. glycerol, sugar alcohols and/or sugars.

Examples of useful sugar alcohols are arabitol, erythritol, isomalt, lactitol, maltitol, mannitol, sorbitol and/or xylitol.

Examples of useful sugars are e.g. monosaccharides, such as glucose, galactose, fructose or disaccharides, such as sucrose and/or lactose.

In some preferred embodiments of the invention the polyol is sucrose and the pphe emulsifier is a sucrose poly(hydroxy fatty acid) ester.

In other preferred embodiments of the invention the polyol is a polymeric polyol, i.e. the product of di-, tri- or polymerisation of one or more types of hydroxyl-containing monomers (e.g. small polyols). The polymeric polyol may e.g. contain, or even consist of, discrete polyols linked by ether linkages, glycosidic linkages and/or acetalic linkages.

In some preferred embodiments of the invention, the polyol is poly(glycerol).

In some embodiments of the invention the polyol has an average degree of polymerisation (DP) of at least 1.5. The polyol may for example have a degree of polymerisation of at least 2. Preferably, the polyol has a degree of polymerisation of at least 3. Alternatively the polyol may have has a degree of polymerisation of at least 4.

In the context of the present invention the term "average degree of polymerisation" or "degree of polymerisation" relates to number-average degree of polymerisation of the polymer or oligomer in question.

In some preferred embodiments of the invention the polyol has an average degree of polymerisation in the range of 1.5-10. The polyol may for example have an average degree of polymerisation in the range of 2-8. Preferably, the polyol has a degree of polymerisation in the range of 2-6.

The poly(hydroxy fatty acid)s are e.g. obtainable by poly-condensation of the hydroxy fatty acids. Hydroxy fatty acids are fatty acids having one or more hydroxyl groups in the hydrocarbon tail.

Each poly(hydroxy fatty acid) contains at least two linked hydroxy fatty acids. In some embodiments of the invention the poly(hydroxy fatty acid) has an average degree of polymerisation of at least 2. The poly(hydroxy fatty acid) may for example have a degree of polymerisation of at least 3. Preferably, the poly(hydroxy fatty acid) has a degree of polymerisation of at least 4. Alternatively, the poly(hydroxy fatty acid) may have a degree of polymerisation of at least 5.

In some preferred embodiments of the invention the poly(hydroxy fatty acid) has an average degree of polymerisation in the range of 2-10. The poly(hydroxy fatty acid) may for example have a degree of polymerisation in the range of 3-8. Preferably, the poly(hydroxy fatty acid) has a degree of polymerisation of at least 4-7.

In some preferred embodiments of the invention at least 80% (w/w) of the poly(hydroxy fatty acid)s of the polyol poly(hydroxy fatty acid) ester contains at least 5 linked hydroxy fatty acids. For example, at least 90% (w/w) of the poly(hydroxy fatty acid) of the polyol poly(hydroxy fatty acid) ester may contain at least 5 linked hydroxy fatty acids.

In some preferred embodiments of the invention, the esterified poly(hydroxy fatty acid) is poly(ricinoleate), i.e. the product of inter-esterification of ricinoleic acid.

Ricinoleic acid can be derived from the castor oil of castor beans and therefore has a vegetable origin and is a renewable resource. In a preferred embodiment of the invention, the ricinoleic acid and the resulting pphe emulsifier (e.g. PGPR) is a green/organic emulsifier.

While the weight ratio between the polyol and the poly(hydroxy fatty acid) of the pphe emulsifier may vary to a certain extent, it is, however, preferred that the poly(hydroxy fatty acid) contributes with at least as much weight to the pphe emulsifier as the polyol.

In some embodiments of the invention, the weight ratio between the polyol and the poly(hydroxy fatty acid) of the pphe is at most 1:1. For example, the weight ratio between the polyol and the poly(hydroxy fatty acid) of the pphe may be at most 1:2. The weight ratio between the polyol and the poly(hydroxy fatty acid) of the pphe may e.g. be at most 1:5, such as approx. 1:10.

The pphe is preferably formed by esterifying poly(hydroxy fatty acid)s with the polyol, whereby ester-linkages are formed between hydroxyl groups of the polyol and carboxylic acid groups of the poly(hydroxy fatty acid)s. The pphe may be produced according to e.g. G. Schuster, "Emulgatoren für Lebensmittel", Springer Verlag 1985. The production may be performed in 3 steps:

1) polyglycerol formation by polymerization of glycerol,
2) polyester formation by self-condensation of the hydroxyl fatty acids, and
3) esterification of the polyglycerol with the polyester of hydroxyl fatty acids.

In some preferred embodiments of the invention, the pphe emulsifier is poly(glycerol) poly(ricinoleate) ester (also referred to as PGPR).

PGPR has GRAS-status (Generally Regarded As Safe for food production) in a number of countries and is therefore used in a number of different food applications, such as in the production of low fat spreads. PGPR is commercially available - e.g. via the products Palsgaard 4110, Palsgaard 4125, Palsgaard 4150 and Palsgaard 4175 (Palsgaard A/S, Denmark).

In some embodiments of the invention the poly(glycerol) of the pphe emulsifier, e.g. PGPR, has an average degree of polymerisation at least 1.5. The poly(glycerol) may for example have a degree of polymerisation of at least 2. Preferably, the poly(glycerol) has a degree of polymerisation of at least 3. Alternatively, the poly(glycerol) may have has a degree of polymerisation of at least 4.

In some preferred embodiments of the invention the poly(glycerol) has an average degree of polymerisation in the range of 1.5-10. The poly(glycerol) may for example have an average degree of polymerisation in the range of 2-8. Preferably, the poly(glycerol) has a degree of polymerisation in the range of 2-5, more preferred in the range of 3-4.

In some embodiments of the invention the poly(ricinoleate) of the pphe emulsifier, e.g. PGPR, has an average degree of polymerisation at least 2. The poly(ricinoleate) may for example have a degree of polymerisation of at least 3. Preferably, the poly(ricinoleate) has a degree of polymerisation of at least 4. Alternatively, the poly(ricinoleate) may have has a degree of polymerisation of at least 5.

In some preferred embodiments of the invention the poly(ricinoleate) has an average degree of polymerisation in the range of 2-10. The poly(ricinoleate) may for example have a degree of polymerisation in the range of 3-8. Preferably, the poly(ricinoleate) has a degree of polymerisation of at least 4-7. Preferably, the poly(ricinoleate) has a degree of polymerisation of 5-6.

In a preferred embodiment the polyol poly(hydroxy fatty acid) ester is made up of poly(glycerol) having an average degree of polymerisation in the range of 2-5, preferably 3-4 and poly(ricinoleate) having an average degree of polymerisation in the range of 4-7, preferably 5-6.

The poly(glycerol) may be polymerized as linear molecules or they may be branched or cyclic. Typically, a part of the polymerized poly(glycerol) molecules are linear whereas the rest is branched and/or cyclic. In some embodiments about 90% of the poly(glycerol) molecules are linear and about 10% of the poly(glycerol) molecules are branched and/or cyclic. In other embodiments about 80% of the poly(glycerol) molecules are linear and about 20% of the poly(glycerol) molecules are branched and/or cyclic. In yet other embodiments about 70% of the poly(glycerol) molecules are linear and about 30% of the poly(glycerol) molecules are branched and/or cyclic. Yet in other embodiments about 60% of the poly(glycerol) molecules are linear and about 40% of the poly(glycerol) molecules are branched and/or cyclic.

In some embodiments of the invention the esterified polyol, e.g. poly(glycerol) has an average degree of substitution of at least 10%. Preferably, the average degree of substitution of the esterified polyol is at last 20%. For example, the average degree of substitution of the esterified polyol may e.g. be at least 30%. The average degree of substitution of the esterified polyol may e.g. be at least 40%.

In context of the present invention the term "average degree of substitution" is determined as

$$\frac{N_0 - N_1}{N_0} * 100\%$$

where $N_0$ is the total number of available hydroxyl groups in the polyol before esterification and $N_1$ is the total number of available hydroxyl groups in the esterified polyol which forms part of the pphe emulsifier.

In some embodiments of the invention, the weight ratio between the poly(glycerol) and the poly(ricinoleate) of the PGPR emulsifier is at most 1:1. For example, the weight ratio between the poly(glycerol) and the poly(ricinoleate) of the PGPR emulsifier may be at most 1:2. The weight ratio between the poly(glycerol) and the poly(ricinoleate) of the PGPR emulsifier may e.g. be at most 1:5, such as approx. 1:10.

In some preferred embodiments of the invention, the pphe emulsifier is the polyol poly(hydroxy fatty acid) ester sucrose poly(ricinoleate) (also referred to as SPR).

The pphe emulsifier may be characterised by one or more parameters, such as its hydroxy value, its saponification value, its acid value and/or its iodine value.

The hydroxy value of a pphe emulsifier may e.g. be 60-120, and preferably 80-100.

The saponification value of a pphe emulsifier may e.g. be 100-300, and preferably 150-250.

The acid value of a pphe emulsifier may e.g. be 0-10, and preferably 0-6.

The iodine value of a pphe emulsifier may e.g. be 10-140, such as e.g. 50-110.

The composition of the invention may, in addition to the pphe emulsifier, comprise a second emulsifier. Examples of useful second emulsifiers are phospholipids like lecithin, ammonium phosphatide and similar emulsifiers.

The composition of the invention may furthermore contain various additional components depending on its specific application. In some embodiments of the invention the composition furthermore comprises one or more components selected from the group consisting of a catalyst, a thickener, a stabilizer, texturizer, an adhesion promoter, a UV stabilizer, a de-glossing agents, a biocide and a combination thereof.

In some embodiments, the composition contains a limited amount of water, such as substantially no water.

The composition may for example contain of at most 10% water by weight relative to the weight of the composition. For example, the composition may contain at most 5% water by weight relative to the weight of the composition. The composition may e.g. contain at most 0.5% water. Alternatively, the composition may contain at most 0.2% water by weight relative to the weight of the composition.

The composition of the invention may be a liquid composition, i.e. the composition contains a sufficient amount of liquid to give it a wet, paste-like appearance or even a liquid appearance.

The term "continuous liquid phase" means that the liquid forms a continuous matrix in which the other components of the composition are either dissolved or suspended. Alternatively, the lipophilic liquid phase may be present in the form of droplets emulsified in an aqueous phase and the water-insoluble particles may be present inside and/or outside the droplets.

The solvents, and optionally also the binders, of the lipophilic liquid phase are often at least poorly soluble in water, and preferably have a solubility in water at 25 degrees C at most 4 g/100 g water, and even more preferably at most 2 g/100 g water, such as at most 1 g/100 g water or even less.

The first population of water-insoluble particles are typically insoluble in the lipophilic liquid phase. Preferably, the first population of water-insoluble particles contact the lipophilic liquid phase, and they may even be dispersed or suspended in the lipophilic liquid phase.

Alternatively, the lipophilic liquid phase is not continuous but present as droplets in an oil-in-water-type emulsion. The first population of water-insoluble particles are preferably present in the emulsified droplets.

In some preferred embodiments of the invention the composition is a liquid paint or coating composition, i.e. a liquid composition which is useful as a paint or coating, and which may dry and/or cure once it has been applied to a suitable surface.

Alternatively, the composition may be a liquid concentrate of the first population of water-insoluble particles, e.g. a liquid concentrate of pigments, which concentrate can be used for the production of paints, coatings or inks.

In other preferred embodiments of the invention the composition is a paste-like concentrate containing water-insoluble particles. A paste-like concentrate containing water-insoluble particles contains at least 40% (w/w) water-insoluble particles.

In some embodiments the composition can be a composition comprising water-insoluble inorganic particles suspended in a lipophilic continuous phase where the composition appear as a solid at room temperature but becomes soft or liquid at elevated temperatures e.g. exceeding the craft point of the lipophilic, continuous phase.

The lipophilic liquid phase typically comprises, or even consists of, one or more solvent(s), i.e. substances which are liquid at room temperature and which contribute to the wet or liquid character of the liquid or paste-like composition.

Examples of suitable solvents are disclosed in US-A-5071479 and include organic solvents, such as aliphatic hydrocarbons, aromatic hydrocarbons, such as xylene, toluene, mixtures of aliphatic and aromatic hydrocarbons having boiling points between 100 and 320 degrees C, preferably between 150 and 230 degrees C; high aromatic petroleum distillates, e.g., solvent naptha, distilled tar oil and mixtures thereof; alcohols such as butanol, octanol and glycols; vegetable and mineral oils; ketones such as acetone; petroleum fractions such as mineral spirits and kerosene, chlorinated hydrocarbons, glycol esters, glycerides, glycol ester ethers, derivatives and mixtures thereof.

The lipophilic liquid phase of the liquid or paste-like composition may furthermore comprise, or even consists of, a binder.

Examples of useful binders are polyvinyl chloride resins, chlorinated rubbers, acrylic resins, methacrylate resins, vinyl chloride-vinyl acetate copolymer systems, butadiene copolymers, drying oils, alkyd resins, asphalt, epoxy resins, urethane resins, polyester resins, phenolic resins, derivatives and mixtures thereof.

Useful alkyd resins may for example comprise, or even consist of, esters of polyunsaturated fatty acids esterified with polyols which are cross-linked by esterification to di- or polycarboxylic acids. Other examples of useful alkyd resins are provided in US 6,780,910 B2.

In the context of the present invention, the terms "alkyd" and "alkyd resin" are used interchangeably.

Examples of useful butadiene copolymers are butadiene-styrene rubbers, butadiene-acrylonitrile rubbers and butadiene-styrene-acrylonitrile rubbers.

Examples of useful drying oils are linseed oil, boiled linseed oil, tung oil and mixtures thereof.

In some preferred embodiments of the invention, the lipophilic liquid phase comprises, or even consists of, both a solvent and a binder. For example, the same substance(s) may function as solvent and binder.

In some preferred embodiments of the invention the liquid or paste-like composition contains a total amount of the first population of water-insoluble particles of at least 40% (w/w) and has a yield value of at most 30 Pa.

The yield value of a liquid or paste-like composition according to the present invention is preferably determined following the procedures outlined in Example 4. We note that the terms "yield value" and "yield strength" are used interchangeably herein.

The liquid or paste-like composition may e.g. contain a total amount of the first population of water-insoluble particles of at least 40% (w/w) and have a yield value of at most 20 Pa. For example, the liquid or paste-like composition may contain a total amount of the first population of water-insoluble particles of at least 40% (w/w) and have a yield value of at most 10 Pa. Alternatively, the liquid or paste-like composition may contain a total amount of the first population of water-insoluble particles of at least 40% (w/w) and have a yield value of at most 5 Pa, such as at most 2 Pa or at most 1 Pa.

The liquid or paste-like composition may contain a total amount of the first population of water-insoluble particles of at least 50% (w/w) and have a yield value of at most 20 Pa. For example, the liquid or paste-like composition may contain a total amount of the first population of water-insoluble particles of at least 50% (w/w) and have a yield value of at most 10 Pa. Alternatively, the liquid or paste-like composition may contain a total amount of the first population of water-insoluble particles of at least 50% (w/w) and have a yield value of at most 5 Pa, such as at most 2 Pa or at most 1 Pa.

The liquid or paste-like composition may e.g. contain a total amount of the first population of water-insoluble particles of at least 60% (w/w) and have a yield value of at most 20 Pa. For example, the liquid or paste-like composition may contain a total amount of the first population of water-insoluble particles of at least 60% (w/w) and have a yield value of at most 10 Pa. Alternatively, the liquid or paste-like composition may contain a total amount of the first population of water-insoluble particles of at least 60% (w/w) and have a yield value of at most 5 Pa, such as at most 2 Pa or at most 1 Pa.

The liquid or paste-like composition may contain a total amount of the first population of water-insoluble particles of at least 70% (w/w) and have a yield value of at most 20 Pa. For example, the liquid or paste-like composition may contain a total amount of the first population of water-insoluble particles of at least 70% (w/w) and have a yield value of at most 10 Pa. Alternatively, the liquid or paste-like composition may contain a total amount of the first population of water-insoluble particles of at least 70% (w/w) and have a yield value of at most 5 Pa, such as at most 2 Pa or at most 1 Pa.

In some preferred embodiments of the invention the liquid or paste-like composition contains a total amount of the first population of water-insoluble particles of at least 40% (w/w) and has a yield value of at most 30 Pa.

The yield value of a liquid or paste-like composition according to the present invention is preferably determined following the procedures outlined in Example 4.

The liquid or paste-like composition may e.g. contain a total amount of the first population of water-insoluble particles in the range of 40-80% (w/w) and have a yield value of at most 20 Pa. For example, the liquid or paste-like composition may contain a total amount of the first population of water-insoluble particles in the range of 40-80% (w/w) and have a yield value of at most 10 Pa. Alternatively, the liquid or paste-like composition may contain a total amount of the first population of water-insoluble particles in the range of 40-80% (w/w) and have a yield value of at most 5 Pa, such as at most 2 Pa or at most 1 Pa.

The liquid or paste-like composition may e.g. contain a total amount of the first population of water-insoluble particles in the range of 45-75% (w/w) and have a yield value of at most 20 Pa. For example, the liquid or paste-like composition may contain a total amount of the first population of water-insoluble particles in the range of 45-75% (w/w) and have a yield value of at most 10 Pa. Alternatively, the liquid or paste-like composition may contain a total amount of the first population of water-insoluble particles in the range of 45-75% (w/w) and have a yield value of at most 5 Pa, such as at most 2 Pa or at most 1 Pa.

The liquid or paste-like composition may e.g. contain a total amount of the first population of water-insoluble particles in the range of 50-70% (w/w) and have a yield value of at most 20 Pa. For example, the liquid or paste-like composition may contain a total amount of the first population of water-insoluble particles in the range of 50-70% (w/w) and have a yield value of at most 10 Pa. Alternatively, the liquid or paste-like composition may contain a total amount of the first population of water-insoluble particles in the range of 50-70% (w/w) and have a yield value of at most 5 Pa, such as at most 2 Pa or at most 1 Pa.

The liquid or paste-like composition may e.g. contain a total amount of the first population of water-insoluble particles in the range of 45-75% (w/w) and have a yield value of at most 20 Pa. For example, the liquid or paste-like composition may contain a total amount of the first population of water-insoluble particles in the range of 45-75% (w/w) and have a yield value of at most 10 Pa. Alternatively, the liquid or paste-like composition may contain a total amount of the first population of water-insoluble particles in the range of 45-75% (w/w) and have a yield value of at most 5 Pa, such as at most 2 Pa or at most 1 Pa.

The liquid or paste-like composition may e.g. contain a total amount of the first population of water-insoluble particles in the range of 50-80% (w/w) and have a yield value of at most 20 Pa. For example, the liquid or paste-like composition may contain a total amount of the first population of water-insoluble particles in the range of 50-80% (w/w) and have a yield value of at most 10 Pa. Alternatively, the liquid or paste-like composition may contain a total amount of the first population of water-insoluble particles in the range of 50-80% (w/w) and have a yield value of at most 5 Pa, such as at most 2 Pa or at most 1 Pa.

The liquid or paste-like composition may e.g.

contain a total amount of the first population of water-insoluble particles in the range of 55-75% (w/w) and have a yield value of at most 20 Pa. For example, the liquid or paste-like composition may contain a total amount of the first population of water-insoluble particles in the range of 55-75% (w/w) and have a yield value of at most 10 Pa. Alternatively, the liquid or paste-like composition may contain a total amount of the first population of water-insoluble particles in the range of 55-75% (w/w) and have a yield value of at most 5 Pa, such as at most 2 Pa or at most 1 Pa.

The liquid or paste-like composition may e.g. contain a total amount of the first population of water-insoluble particles in the range of 60-70% (w/w) and have a yield value of at most 20 Pa. For example, the liquid or paste-like composition may contain a total amount of the first population of water-insoluble particles in the range of 60-70% (w/w) and have a yield value of at most 10 Pa. Alternatively, the liquid or paste-like composition may contain a total amount of the first population of water-insoluble particles in the range of 60-70% (w/w) and have a yield value of at most 5 Pa, such as at most 2 Pa or at most 1 Pa.

In some preferred embodiments of the invention the liquid or paste-like composition contains a total amount of the first population of water-insoluble particles of at least 40% (w/w) and has a plastic viscosity of at most 200 Pa*s.

The plastic viscosity of a liquid or paste-like composition according to the present invention is preferably determined following the procedures outlined in Example 4.

The liquid or paste-like composition may e.g. contain a total amount of the first population of water-insoluble particles of at least 40% (w/w) and have a plastic viscosity of at most 75 Pa*s. For example, the liquid or paste-like composition may contain a total amount of the first population of water-insoluble particles of at least 40% (w/w) and have a plastic viscosity of at most 50 Pa*s. Alternatively, the liquid or paste-like composition may contain a total amount of the first population of water-insoluble particles of at least 40% (w/w) and have a plastic viscosity of at most 30 Pa*s, such as at most 20 Pa*s or at most 10 Pa*s.

The liquid or paste-like composition may e.g. contain a total amount of the first population of water-insoluble particles of at least 50% (w/w) and have a plastic viscosity of at most 75 Pa*s. For example, the liquid or paste-like composition may contain a total amount of the first population of water-insoluble particles of at least 50% (w/w) and have a plastic viscosity of at most 50 Pa*s. Alternatively, the liquid or paste-like composition may contain a total amount of the first population of water-insoluble particles of at least 50% (w/w) and have a plastic viscosity of at most 30 Pa*s, such as at most 20 Pa*s or at most 10 Pa*s.

The liquid or paste-like composition may e.g. contain a total amount of the first population of water-insoluble particles of at least 60% (w/w) and have a plastic viscosity of at most 75 Pa*s. For example, the liquid or paste-like composition may contain a total amount of the first population of water-insoluble particles of at least 60% (w/w) and have a plastic viscosity of at most 50 Pa*s. Alternatively, the liquid or paste-like composition may contain a total amount of the first population of water-insoluble particles of at least 60% (w/w) and have a plastic viscosity of at most 30 Pa*s, such as at most 20 Pa*s or at most 10 Pa*s.

The liquid or paste-like composition may e.g. contain a total amount of the first population of water-insoluble particles of at least 70% (w/w) and have a plastic viscosity of at most 75 Pa*s. For example, the liquid or paste-like composition may contain a total amount of the first population of water-insoluble particles of at least 70% (w/w) and have a plastic viscosity of at most 50 Pa*s. Alternatively, the liquid or paste-like composition may contain a total amount of the first population of water-insoluble particles of at least 70% (w/w) and have a plastic viscosity of at most 30 Pa*s, such as at most 20 Pa*s or at most 10 Pa*s.

The liquid or paste-like composition may e.g. contain a total amount of the first population of water-insoluble particles in the range of 40-80% (w/w) and have a plastic viscosity of at most 75 Pa*s. For example, the liquid or paste-like composition may contain a total amount of the first population of water-insoluble particles in the range of 40-80% (w/w) and have a plastic viscosity of at most 50 Pa*s. Alternatively, the liquid or paste-like composition may contain a total amount of the first population of water-insoluble particles in the range of 40-80% (w/w) and have a plastic viscosity of at most 30 Pa*s, such as at most 20 Pa*s or at most 10 Pa*s.

The liquid or paste-like composition may e.g. contain a total amount of the first population of water-insoluble particles in the range of 45-75% (w/w) and have a plastic viscosity of at most 75 Pa*s. For example, the liquid or paste-like composition may contain a total amount of the first population of water-insoluble particles in the range of 45-75% (w/w) and have a plastic viscosity of at most 50 Pa*s. Alternatively, the liquid or paste-like composition may contain a total amount of the first population of water-insoluble particles in the range of 45-75% (w/w) and have a plastic viscosity of at most 30 Pa*s, such as at most 20 Pa*s or at most 10 Pa*s.

The liquid or paste-like composition may e.g. contain a total amount of the first population of water-insoluble particles in the range of 50-70% (w/w) and have a plastic viscosity of at most 75 Pa*s. For example, the liquid or paste-like composition may contain a total amount of the first population of water-insoluble particles in the range of 50-70% (w/w) and have a plastic viscosity of at most 50 Pa*s. Alternatively, the liquid or paste-like composition may contain a total amount of the first population of water-insoluble particles in the range of 50-70% (w/w) and have a plastic viscosity of at most 30 Pa*s, such as at most 20 Pa*s or at most 10 Pa*s.

The liquid or paste-like composition may e.g. contain a total amount of the first population of water-insoluble particles in the range of 50-80% (w/w) and have a plastic viscosity of at most 75 Pa*s. For example, the liquid or paste-like composition may contain a total amount of the first population of water-insoluble particles in the range of 50-80% (w/w) and have a plastic viscosity of at most 50 Pa*s. Alternatively, the liquid or paste-like composition may contain a total amount of the first population of water-insoluble particles in the range of 50-80% (w/w) and have a plastic viscosity of at most 30 Pa*s, such as at most 20 Pa*s or at most 10 Pa*s.

The liquid or paste-like composition may e.g. contain a total amount of the first population of water-insoluble particles in the range of 55-75% (w/w) and have a plastic viscosity of at most 75 Pa*s. For example, the liquid or paste-like composition may contain a total amount of the first population of water-insoluble particles in the range of 55-75% (w/w) and have a plastic viscosity of at most 50 Pa*s. Alternatively, the liquid or paste-like composition may contain a total amount of the first population of water-insoluble particles in the range of 55-75% (w/w) and have a plastic viscosity of at most 30 Pa*s, such as at most 20 Pa*s or at most 10 Pa*s.

The liquid or paste-like composition may e.g. contain a total amount of the first population of water-insoluble particles in the range of 60-70% (w/w) and have a plastic viscosity of at most 75 Pa*s. For example, the liquid or paste-like composition may contain a total amount of the first population of water-insoluble particles in the range of 60-70% (w/w) and have a plastic viscosity of at most 50 Pa*s. Alternatively, the liquid or paste-like composition may contain a total amount of the first population of water-insoluble particles in the range of 60-70% (w/w) and have a plastic viscosity of at most 30 Pa*s, such as at most 20 Pa*s or at most 10 Pa*s.

The liquid composition may be a paint or coating composition formulated for treatment of a surface selected from indoor and outdoor surfaces.

The composition of the present invention, e.g. the liquid paint or coating composition, may furthermore comprise one or more adjuvants. These one or more adjuvants may e.g. be selected from additional fungicides, auxiliary solvents, fillers, bulking agents, processing additives, such as defoamers, fixatives, plasticisers, UV-stabilizers or stability enhancers, siccatives, corrosion inhibitors, thickeners or anti-settlement agents, such as cellulose derivatives, polyacrylic acid or poly(methacrylic acid), anti-skinning agents, derivatives and mixtures thereof.

The composition may contain a suitable blend of all or a selection the above listed compounds.

In some preferred embodiments of the invention, composition is an emulsion comprising droplets containing the lipophilic liquid phase.

In one aspect, the paint or coating composition is an oil paint and in particular a linseed oil paint.

Oil paints can e.g. be made from linseed oil, tung oil or other poly unsaturated triglycerides as well as polyester (alkyds) of polysaturated fatty acids, such as e.g. tall oil fatty acids and polyols like pentaerhytitol. Linseed oil is typically used on wood. The paint may e.g. contain boiled linseed oil (linseed varnish) or raw linseed oil, pigments and if necessary the paint can also contain a drier or siccative.

Linseed oil paint may e.g. be made by adding 4 parts of boiled linseed oil to a 1-2 parts of pigments. The amount of pigment depends on the colour and the oil. A thick paste is mixed followed by addition of more linseed oil until the oil paint has a consistency applicable to paint on a surface. If necessary, drier or siccative can be added, e.g. in an amount of 0.1-7% (w/w), to decrease the drying period. The boiled linseed oil can be replaced by raw linseed oil, tung oil, other drying oils or mixtures thereof.

In some embodiments of the invention, the composition is a liquid paint or coating composition having a continuous lipophilic liquid phase, the composition comprising:

- a total amount of the first population of water-insoluble particles in an amount in the range of 5-40% (w/w), which particles have an average particle size in the range of 0.1-1 micron,
- a total amount of pphe emulsifier, such as e.g. PGPR, in the range of 0.2-2%,
- a total amount of lipophilic liquid phase containing a drying oil and/or an alkyd, which lipophilic continuous liquid phase is in an amount in the range of 58-95% (w/w),

which liquid paint or coating composition has a yield strength of at most 5 Pa.

In some embodiments, the liquid paint or coating composition contains a limited amount of water, such as substantially no water.

The liquid paint or coating composition may for example contain at most 10% water by weight relative to the weight of the composition. For example, the liquid paint or coating composition may contain at most 5% water by weight relative to the weight of the composition. The composition may e.g. contain at most 0.5% water. Alternatively, the liquid paint or coating composition may contain at most 0.2% water by weight relative to the weight of the composition.

Alternatively, the paint or coating composition may be an emulsion comprising a continuous aqueous phase and droplets of a lipophilic liquid phase. The lipophilic liquid phase of the droplets may for example contain binder that allow for the formation of crosslinks between the matter of adjacent droplets when the water of the continuous aqueous phase evaporates.

The emulsion may for example contain a population of type 1 droplets containing:

- a lipophilic liquid phase comprising a binder,

- pphe emulsifier, and
- water-insoluble particles as defined herein.

In the context of the present invention, the term "type 1 droplets" pertains to droplets containing emulsified lipophilic phase including binder, at least one water-insoluble particle and pphe emulsifier.

The type 1 droplets may for example comprise at least 5% (w/w) binder, preferably at least 10% (w/w) binder, and even more preferably at least 20% (w/w) binder. The type 1 droplets may e.g. comprise a total amount of binder in the range of 5-80% (w/w), preferably in the range of 10-60% (w/w), and even more in the range of 15-40% (w/w).

The type 1 droplets also contain the pphe emulsifier, e.g. PGPR, which typically is present in an amount of at least 5% (w/w), preferably at least 10% (w/w), and even more preferably at least 20% (w/w). The type 1 droplets may e.g. comprise a total amount of the pphe emulsifier in the range of 5-80% (w/w), preferably in the range of 10-60% (w/w), and even more in the range of 15-40% (w/w).

A substantial part of the water-insoluble particles are preferably located at least partly inside the droplets or at least attached to the droplets.

In some preferred embodiments of the invention, the emulsion furthermore comprises a population of type 2 droplets which comprises, or even essentially consists of, liquid lipophilic phase comprising at least 50% (w/w) binder. The type 2 droplets may for example comprise at least 70% (w/w) binder, preferably at least 80% (w/w) binder, and even more preferably at least 90% (w/w) binder.

It may be preferred that the type 2 droplets contain substantially no water-insoluble particles, i.e. at most 5% (w/w) water-insoluble particles, and more preferably at most 1% (w/w) water-insoluble particles relative to the weight of the type 2 droplets.

The average droplet size of the type 1 droplets is preferably at most 10 microns, and even more preferably at most 5 micron, such as at most 1 micron. Even small droplet sizes may be preferred, thus the average droplet size of the type 1 droplets may e.g. be at most 0.8 micron, and even more preferably at most 0.6 micron, such as e.g. at most 0.4 micron. The average droplet size of the type 1 droplets may e.g. be at most 0.3 micron.

The average droplet size of the type 1 droplets may for example be in the range of 0.05-10 microns, preferably in the range of 0.07-1 microns, and even more preferably in the range of 0.1-0.5 microns.

The average droplet size of the type 2 droplets is preferably at most 10 microns, and even more preferably at most 5 micron, such as at most 1 micron. Even small droplet sizes may be preferred, thus the average droplet size of the type 2 droplets may e.g. be at most 0.8 micron, and even more preferably at most 0.6 micron, such as e.g. at most 0.4 micron. The average droplet size of the type 2 droplets may e.g. be at most 0.3 micron.

The average droplet size of the type 2 droplets may for example be in the range of 0.05-10 microns, preferably in the range of 0.07-1 microns, and even more preferably in the range of 0.1-0.5 microns.

The emulsion may e.g. comprise

- a total amount of water in the range of 10-88% (w/w), and
- a total amount of type 1 droplets in the range of 10-85%, and
- a total amount of emulsifier in the range of 0.5-10% (w/w).

Alternatively, the emulsion may comprise

- a total amount of water in the range of 15-80% (w/w),
- a total amount of type 1 droplets in the range of 5-70%, and
- a total amount of type 2 droplets in the range of 5-70,% and
- a total amount of emulsifier in the range of 0.5-10% (w/w).

The emulsion normally contains an auxiliary emulsifier, in addition to the pphe emulsifier, to stabilise the lipophilic droplets in the continuous aqueous phase. The auxiliary emulsifier is typically an emulsifier that favours the formation of oil-in-water emulsions and which is useful for emulsifying alkyd resins or similar binder types in water. Such emulsifiers are well-known in the art and may for example comprise one or more non-ionic emulsifier, such as alcohol ethoxylates, and/or one or more anionic emulsifier such as alkyl sulfonates, alkyl/aryl sulfonates, or ether carboxylates. Useful auxiliary emulsifier are often characterised by having a high HLB value, i.e. a high hydrophilic-lipophilic balance value.

When used, the weight ratio of nonionic emulsifiers to anionic emulsifiers, e.g. alkyl aryl sulphonate, ether carboxylate or a mixture, may e.g. be from 90:10 to 10:90, desirably 80:20 to 20:80, and particularly 75:25 to 25:75.

Suitable method of producing the emulsion may be found in US 6,780,910 B2.

The liquid paint or coating composition of the present invention can be applied by any of the techniques known in the art including brushing, spraying, roll coating, dipping and combinations thereof.

In some preferred embodiments of the invention, the composition is a paste-like concentrate of the first population of water-insoluble particles comprising:

- a total amount of the first population of water-insoluble particles in an amount in the range of 40-80% (w/w), which water-insoluble particles have an average particle size in the range of 0.1-1 micron,
- a total amount of pphe emulsifier, such as e.g. PGPR, in the range of 0.5-5%,
- a total amount of lipophilic continuous liquid phase containing a drying oil and/or an alkyd, which lipophilic continuous liquid phase is in an amount in the range of 5-55% (w/w),

which paste-like concentrate having a yield strength of at most 30 Pa.

The paste-like concentrate may contain a limited amount of water, such as substantially no water.

The paste-like concentrate may for example contain of at most 10% water by weight relative to the weight of the concentrate. For example, the paste-like concentrate may contain at most 5% water by weight relative to the weight of the concentrate. The paste-like concentrate may e.g. contain at most 0.5% water. Alternatively, the paste-like concentrate may contain at most 0.2% water by weight relative to the weight of the concentrate.

Alternatively, the compositions may be a paste-like emulsion, such as pigment paste emulsions to be used as a masterbatch for colouring an emulsion-based paint product.

A paste-like emulsion may e.g. be produced in the following way. The pphe emulsifier, e.g. the PGPR emulsifier, is mixed thoroughly into the lipophilic liquid phase, e.g. 20/min·1000 for 1-10 minute using a homogenizer (IKA T25 digital ULTRA TURRAX), which preferably contains, or even consists of, one or more binders. Highly viscous lipophilic liquid phases may require heating before the mixing takes place. Subsequently, the first population of water-insoluble particles (e.g. pigments) is added to and thoroughly dispersed into the blend of lipophilic liquid phase and pphe emulsifier.

Then water and optionally also an auxiliary emulsifier is emulsified into the above mixture, optionally using high shear mixing, milling or grinding, to ensure that the water-insoluble particles are well dispersed and to reduce the droplet size of the emulsion. The resulting paste-like emulsion is preferably an oil-in-water emulsion but may also be an oil-in-water emulsion or a combination of both emulsion types.

In some preferred embodiments of the invention, the composition is a paste-like emulsion comprising:

- a total amount of the first population of water-insoluble particles in an amount in the range of 20-50% (w/w), which water-insoluble particles have an average particle size in the range of 0.1-1 micron,
- a total amount of pphe emulsifier, such as e.g. PGPR, in the range of 5-45%,
- a total amount of lipophilic liquid phase, containing a drying oil and/or an alkyd, in an amount in the range of 5-50% (w/w),
- water in an amount of 10-40% (w/w), and

which paste-like emulsion has a yield strength of at most 30 Pa.

In other preferred embodiments of the invention the composition is a dry composition. Preferably, a dry composition contains at most 5% lipophilic, continuous liquid phase.

A dry composition may for example have a dry appearance, e.g. in the form of a dry powder or dry pellets.

In some embodiments of the invention, at least a portion of the pphe emulsifier of the dry composition is located on the surface of at least some of the first population of water-insoluble particles.

In some embodiments of the invention, at least a portion of the pphe emulsifier of the dry composition is located on the surface of substantially all the first population of water-insoluble particles.

For example, substantially all of the pphe emulsifier of the dry composition may be located on the surface of the first population of water-insoluble particles.

In some preferred embodiments of the invention, the first population of water-insoluble particles are at least partly, and preferably fully, coated with the pphe emulsifier.

In some embodiments of the invention, the composition is a dry composition water-insoluble particles comprising:

- a total amount of the first population of water-insoluble particles in an amount in the range of 40-99% (w/w), which water-insoluble particles having an average particle size in the range of 0.1-1 micron,
- a total amount of pphe emulsifier, such as e.g. PGPR, in the range of 0.5-10%,
- optionally a total amount of lipophilic liquid phase containing a drying oil and/or an alkyd, which lipophilic liquid phase is in an amount of at most 5% (w/w).

The dry compositions of the invention are particularly useful for including the first population of water-insoluble particles into lipophilic matrices such as e.g. the lipophilic continuous liquid phase of a paint, ink or coating.

Even though lower concentrations may be used, the total amount of the pphe emulsifier is typically at least 0.1% (w/w) relative to the total weight of the composition.

In some preferred embodiments of the invention, the total amount of the pphe emulsifier is at least 0.2% (w/w) relative to the total weight of the composition. For example, the total amount of the pphe emulsifier may be at least 0.4% (w/w) relative to the total weight of the composition. The total amount of the pphe emulsifier may e.g. be at least 0.6% (w/w) relative to the total weight of the composition. Alternatively, the total amount of the pphe emulsifier may e.g. be at least 0.8% (w/w), such as e.g. at least 1.0% (w/w), relative to the total weight of the composition.

In some preferred embodiments of the invention the total amount of the pphe emulsifier is in the range of 0.1-15% (w/w) relative to the total weight of the composition. For example, the total amount of the pphe emulsifier may be in the range of 0.2-10% (w/w) relative to the total weight of the composition. The total amount of the pphe emulsifier may e.g. be in the range of 0.4-5% (w/w) relative to the total weight of the composition. It may be preferred that the total amount of the pphe emulsifier is in the range of 0.6-2% (w/w) relative to the total weight of the composition, such as e.g. in the range of 0.6-2% (w/w).

Alternatively, the total amount of the pphe emulsifier may be in the range of 0.1-2% (w/w) relative to the total weight of the composition. The total amount of the pphe emulsifier may e.g. be in the range of 0.2-1.5% (w/w) relative to the total weight of the composition. It may be preferred that the total amount of the pphe emulsifier is in the range of 0.3-1.0% (w/w) relative to the total weight of the composition, such as e.g. in the range of 0.4-0.8% (w/w).

Somewhat higher concentrations of pphe emulsifier may be preferred, e.g. when the composition is a paste-like or dry composition. Thus, the total amount of the pphe emulsifier may be in the range of 1-5% (w/w) relative to the total weight of the composition. The total amount of the pphe emulsifier may e.g. be in the range of 1.2-4.5% (w/w) relative to the total weight of the composition. For example, the total amount of pphe emulsifier may be in the range of 1.5-4% (w/w) relative to the total weight of the composition, such as e.g. in the range of 2-4% (w/w).

When the pphe emulsifier is PGPR it is typically used in an amount of at least 0.1% (w/w) relative to the total weight of the composition.

In some preferred embodiments of the invention, the total amount of PGPR is at least 0.2% (w/w) relative to the total weight of the composition. For example, the total amount of PGPR may be at least 0.4% (w/w) relative to the total weight of the composition. The total amount of PGPR may e.g. be at least 0.6% (w/w) relative to the total weight of the composition. Alternatively, the total amount of PGPR may e.g. be at least 0.8% (w/w), such as e.g. at least 1.0% (w/w), relative to the total weight of the composition.

In some preferred embodiments of the invention the total amount of PGPR is in the range of 0.1-15% (w/w) relative to the total weight of the composition. For example, the total amount of PGPR may be in the range of 0.2-10% (w/w) relative to the total weight of the composition. The total amount of PGPR may e.g. be in the range of 0.4-5% (w/w) relative to the total weight of the composition. It may be preferred that the total amount of PGPR is in the range of 0.6-2% (w/w) relative to the total weight of the composition, such as e.g. in the range of 0.6-2% (w/w).

Alternatively, the total amount of PGPR may be in the range of 0.1-2% (w/w) relative to the total weight of the composition. The total amount of PGPR may e.g. be in the range of 0.2-1.5% (w/w) relative to the total weight of the composition. It may be preferred that the total amount of PGPR is in the range of 0.3-1.0% (w/w)

relative to the total weight of the composition, such as e.g. in the range of 0.4-0.8% (w/w).

Somewhat higher concentrations of PGPR emulsifier may be preferred, e.g. when the composition is a paste-like or dry composition. Thus, the total amount of PGPR emulsifier may be in the range of 1-5% (w/w) relative to the total weight of the composition. The total amount of PGPR emulsifier may e.g. be in the range of 1.2-4.5% (w/w) relative to the total weight of the composition. For example, the total amount of PGPR emulsifier may be in the range of 1.5-4% (w/w) relative to the total weight of the composition, such as e.g. in the range of 2-4% (w/w).

The optimal concentration of the pphe emulsifier depends on the intended weight percentage of the first population of water-insoluble particles in the final product and on the particle size of the first population of water-insoluble particles. The surface area of the particles increases with the square of the particle size (diameter), thus reducing the particle size with a factor of 2 increases the surface area of the particles with a factor of 4. Compositions containing small particles therefore generally require more pphe emulsifier than compositions containing larger water-insoluble particles.

The composition of the invention is preferably packaged in a suitable container.

A further aspect of the invention pertains to a method of producing the composition containing water-insoluble particles, which method comprises the steps of

a) providing the ingredients of the composition including a pphe emulsifier, the first population of water-insoluble particles, and any additional ingredients, and

b) combining the pphe emulsifier, the first population of water-insoluble particles, and the additional ingredients, if any, so as to form the composition containing water-insoluble particles.

In some preferred embodiments of the invention where the composition a liquid or paste-like paint or coating composition, the additional ingredient(s) include a lipophilic liquid phase as described above. In pigments paste or concentrated suspension, the pphe emulsifier can be added directly to the liquid phase where the liquid can be suitable oil, alkyd etc. or can be a solution with a low boiling solvent which after addition of the emulsifier and pigments are removed by distillation/evaporation to yield a convenient concentrate where the first population of water-insoluble particles are well wetted.

In some preferred embodiments of the invention where the composition is a dry composition, step b) may involve spraying the pphe emulsifier to the surface of the first population of water-insoluble particles or alternatively spray an emulsifier thinned with a low boiling solvent to the particles and e.g. remove the solvent by heating.

Alternatively, the step b) of the method of preparing a dry composition may involve mixing the pphe emulsifier with the first population of water-insoluble particles. The pphe emulsifier may e.g. be in the form of a powder containing, or even consisting of, the pphe emulsifier.

Yet an aspect of the invention relates to various uses of the pphe emulsifier for the yield value and/or plastic viscosity of a composition containing water-insoluble particles and a lipophilic liquid phase, e.g. a liquid or paste-like coating composition, such as a liquid or paste-like paint or coating composition.

The inventor has observed that the pphe emulsifier allows for increasing the amount of the first population of water-insoluble particles in liquid or paste-like compositions beyond the normally used level of particles without compromising the flow characteristics of the composition.

Thus, another aspect of the invention relates to the use of a pphe emulsifier for increasing the maximum content of the first population of water-insoluble particles of a liquid or paste-like composition containing water-insoluble particles and a lipophilic, continuous liquid phase.

The present inventor has discovered that the pphe emulsifiers, when used in compositions containing a first population of water-insoluble particles and a lipophilic liquid phase, reduces the energy required for mixing during the production of the final compositions.

Thus, yet an aspect of the invention relates to the use of a pphe emulsifier for saving energy during the production of a liquid or paste-like composition containing a first population of water-insoluble particles and a lipophilic liquid phase.

The inventor has furthermore seen indications that the pphe emulsifiers of the present invention reduces the number of pin holes in the dried/cured coating or paint of a liquid coating/paint composition containing a first population of water-insoluble particles and a lipophilic liquid phase.

Thus, a further aspect of the invention relates to the use of a pphe emulsifier for reducing the number of pin-holes in the dried/cured composition, which is obtained when a liquid composition containing a first population of water-insoluble particles and a lipophilic liquid phase is applied to a surface and allowed to dry and, if possible, also cure.

The inventor has also seen indications that the presence of a pphe emulsifier in a paint or coating composition improves the coverage obtained when paint or coating composition is applied to a surface.

Still a further aspect of the invention relates to the use of a pphe emulsifier for improving the coverage of a liquid composition containing a first population of water-insoluble particles and:

- a lipophilic, continuous liquid phase, or lipophilic liquid phase emulsified in a continuous aqueous phase.

The above-mentioned uses all involve adding the pphe emulsifier to one or more of the other ingredients during the production of the wet paint.

Yet an aspect of the invention pertains to the use of the dry composition as an ingredient for the production of a suspension or concentrate of the first population of water-insoluble particles. The suspension or concentrate may for example be produced by mixing the dry composition with a lipophilic continuous phase as described herein.

It should be noted that embodiments and features described in the context of one of the aspects or embodiments of the present invention also apply to the other aspects or embodiments of the invention.

The invention will now be described in further details in the following non-limiting examples.

## EXAMPLES

### Example 1 - Preparation of TiO$_2$ paint samples with different emulsifiers

The purpose of this experiment was to observe how the plastic viscosity and yield value of a paint composition changes at different pigment and emulsifier concentrations.

Materials

The paint formulations were tested with Ti0$_2$ as pigment (Cristal 128, Morsø Maling ApS). The particles size of Cristal 128 was determined by laser scattering particle size distribution analysis using a laser particle size analyser (LA-950, Horiba, Japan). The following particle size distribution was found:
D$_{10}$=0.18 micron, D$_{50}$=0.31 micron, D$_{90}$=0.74 micron.

As continuous phase either cold pressed linseed oil or boiled linseed oil (Morsø Maling ApS, Denmark; Borup Kemi A/S, Denmark) were used, and as emulsifiers PGPR (PGPR 4125, Palsgaard A/S, Denmark) and CITREM (CITREM 4201, Palsgaard A/S, Denmark) were tested at different concentrations.

Method

Paint samples containing varying amounts of Ti0$_2$ emulsifier and continuous phase were prepared using an experimental design involving the following factors:

- Emulsifier type: PGPR or CITREM
- Emulsifier concentration: 0%, 0.5%, 1.0%, and 1.5%
- TiO$_2$ concentration: 30%, 40%, 50%, 60% and 70%
- Continuous phase: cold pressed linseed oil or boiled linseed oil

All samples were prepared by initially mixing the emulsifier into the continuous phase at 20/min·1000 for 1 minute using a homogenizer (IKA T25 digital ULTRA

TURRAX). The $TiO_2$ pigment was added immediately afterwards and the formulation mixed by the homogenizer at 20/min·1000 in 4 min to ensure wetting of the pigment, to break down agglomerates and to disperse the pigment particles evenly through the continuous phase.

The preparation of paint samples was performed at room temperature (20 degrees C).

Characterisation

The paint samples were allowed to rest 2 hours after which they were stirred manually. A sub-sample of each paint sample was taken and the yield value for each sub-sample was characterized according to Example 4.

Results

As expected, the measurements show that an increased dry matter, i.e. increased pigment concentration, increases the plastic viscosity and yield value.

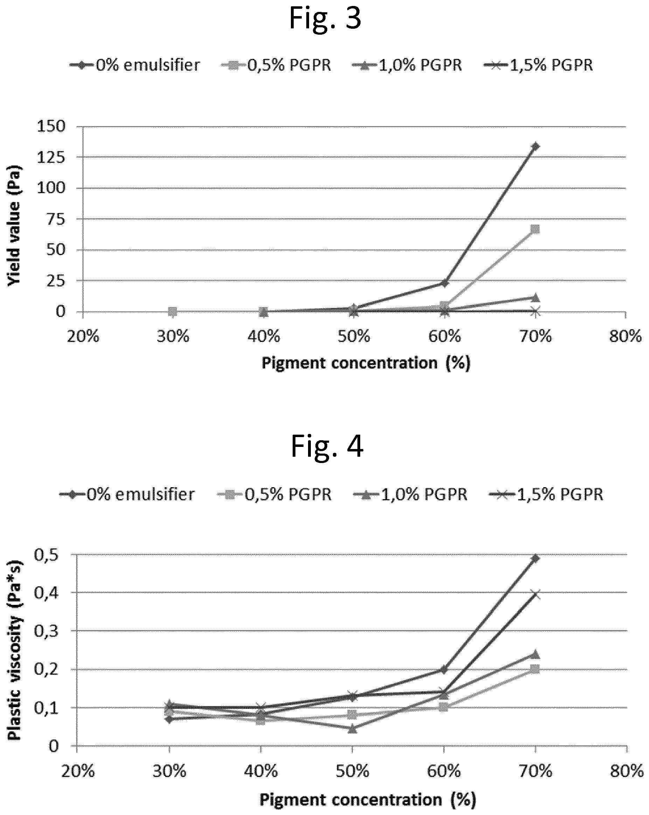

The addition of PGPR has a significant and very promising effect on the yield value on both cold pressed linseed oil and boiled linseed oil, which can be seen in Figs. 2 and 3, as the addition of PGPR decreases the yield value at increased concentrations. Addition of 1.5% PGPR is especially effective - with this emulsifier concentration it is possible to make a paint formulation of 70% $TiO_2$ with nearly the same yield value as for the formulation of 30% $TiO_2$ without emulsifier. Actually, the effect of PGPR is so good that addition of 1.5% results in almost the same yield value for all pigment concentrations between 30% and 70%.

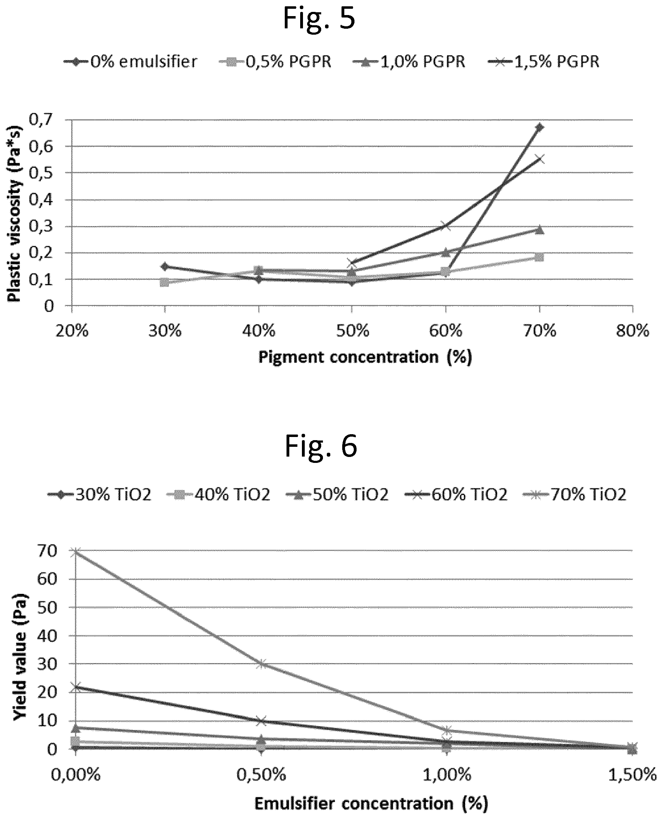

The effect of PGPR is less on the plastic viscosity (see Fig. 4 and Fig. 5). No significant difference in plastic viscosity is observed at small pigment concentrations. At higher concentrations (60-70 %) the plastic viscosity responds differently and high emulsifier concentrations do not necessarily result in the lowest plastic viscosity as seen with the yield value. As mentioned earlier, this can be due to the fact that a too high polymer concentration can result in desorption of the polymer as it is too soluble in the bulk, or the polymer can fold back on to the pigment surface, resulting in collapse of the sterical hindrance. 0.5% PGPR results in the lowest plastic viscosity at 70% on both cold pressed linseed oil and boiled linseed oil. The change in plastic viscosity is, however, not that high - maximum 0.6 Pa*s.

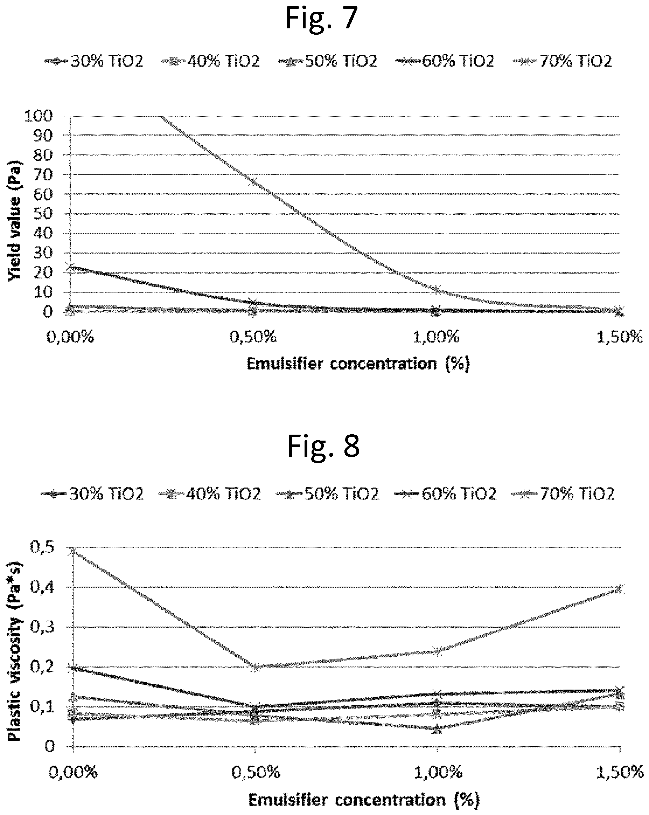

If the yield value is plotted as a function of the emulsifier concentration, it is clear to see the large effect of PGPR, especially in the 70% $TiO_2$ formulation (Fig. 6 and Fig. 7). The yield value for boiled linseed oil 30% $TiO_2$ is so low that it cannot be seen in Fig. 7.

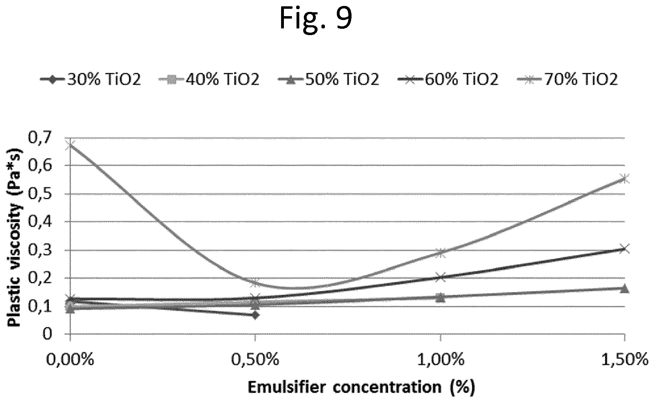

According to Fig. 8, the optimum emulsifier concentration for cold pressed linseed oil, as regards the plastic viscosity, is 0.5%, except for the 50% $TiO_2$ formulation where the optimum is at 1.0% PGPR. For boiled linseed oil (Fig. 9) the plastic viscosity actually responds negatively on the addition of emulsifier, except for the

70% $TiO_2$ formulation which has an optimum at 0.5% addition of PGPR.

**Example 2 - Preparation of $Fe_2O_3$ paint samples**

The purpose of this experiment was to observe how the yield value of a paint composition changes at different concentrations of $Fe_2O_3$ pigment and emulsifier.

Materials

The paint formulations were tested with red $Fe_2O_3$ pigment (Bayferrox 180M, Lanxess, Germany), cold pressed linseed oil (Morsø Maling ApS, Denmark) as continuous phase and PGPR (PGPR 4125, Palsgaard A/S, Denmark) as emulsifier.

The particles size of Bayferrox 180M was determined by laser scattering particle size distribution analysis using a laser particle size analyser (LA-950, Horiba, Japan). The following particle size distribution was found:

$D_{10}$=0.70 micron, $D_{50}$=1.45 micron, $D_{90}$=3.12 micron.

Method

Paint samples containing varying amounts of $Fe_2O_3$ emulsifier and continuous phase were prepared using an experimental design involving the following factors:

- Emulsifier type: PGPR
- Emulsifier concentration: 0%, 0.5%, 1.0%, and 1.5%
- $Fe_2O_3$ concentration: 50%, 60% and 70%
- Continuous phase: cold pressed linseed oil

All samples were prepared by initially mixing the emulsifier into the continuous phase at 20/min·1000 for 1 minute using a homogenizer (IKA T25 digital ULTRA TURRAX). The $Fe_2O_3$ pigment was added immediately afterwards and the formulation mixed by the homogenizer at 20/min·1000 in 4 min to ensure wetting of the pigment, to break down agglomerates and to disperse the pigment particles evenly through the continuous phase.

The preparation of paint samples was performed at room temperature (20 degrees C).

Characterisation

Similar to Example 1, the paint samples were allowed to rest 2 hours after which they were stirred manually. A sub-sample of each paint sample was taken and the yield value for each sub-sample was characterized according to Example 4.

Results

Similar to Example 1, a significant decrease in yield value was observed upon addition of PGPR, especially with respect to the high samples containing 60% or 70% $Fe_2O_3$.

## Example 3 - Effect of PGPR in Zn(s)-compositions

The purpose of this experiment was to determine the effect of pphe emulsifiers on paint-like samples containing small particles of Zink metal (Zn(s)).

The anti-rust paint Galvafroid (Fosroc Limited, UK) was used as model system and contains Zn(s) particles, ZnO particles, solvent naphtha, trimethylbenzene, chlorinated paraffin xylene and cumene. The dry paint contains approx. 90% (w/w).

Samples of Galvafroid were mixed with different amounts of PGPR starting from 0 to 3% (w/w). The addition of PGPR clearly altered the rheological properties of the paint, which appeared less viscous and easier applicable after the addition PGPR. The viscosity of the Galvafroid samples were measured according to Example 4 and lowest viscosity was found at a PGPR concentration of 1.7% (w/w) ($3.6*10^3$ cP) which is approx. 22% lower than that of Galvafroid without PGPR ($4.6*10^3$ cP).

## Example 4 - Characterisation of the rheological profile

This example describes a method of evaluating the rheological profile of a paint or a coating composition.

The composition to be tested is initially stirred manually to form a uniform distribution of particles, and a sample is then taken from the composition.

The room temperature during the characterisation and the temperature of the sample should be 20 degrees C.

The characterisation of the rheological profile of the sample is performed using a viscometer (Thermo HAAKE Rotovisco 1 Rheometer) with concentric spindle z38 and cup z43 and using the Rheowin 3.5 software from ThermoScientic.

The result of the measurements is a flow curve from 20 to 0 s$^{-1}$ out of which the plastic viscosity and yield value can be determined by Casson regressions in the area $0 < \gamma < 18$ s$^{-1}$ and $0 < \gamma < 2$ s$^{-1}$, respectively.

## Claims

1. A liquid composition comprising a lipophilic continuous liquid phase, a total amount of a first population of water-insoluble particles of at least 1% (w/w), and a polyol poly(hydroxy fatty acid) ester emulsifier (pphe emulsifier), said water-insoluble particles are dispersed in the lipophilic liquid phase.

2. The liquid composition according to claim 1, wherein the polyol poly(hydroxy fatty acid) ester contains two poly(hydroxy fatty acid)s, three poly(hydroxy fatty acid)s, or four poly(hydroxy fatty acid)s.

3. The liquid composition according to claim 1 or 2, wherein the pphe emulsifier is polyglycerol polyricinoleate, which is prepared from glycerol and ricinoleic acid.

4. The liquid composition according to any of the preceding claims, wherein the first population of water-insoluble particles are hydrophilic water-insoluble particles having a contact angle relative to a droplet of demineralized water of less than 90 degrees.

5. The liquid composition according to any of the preceding claims, wherein the first population of water-insoluble particles comprise, or even consist of, inorganic material.

6. The liquid composition according to any of the preceding claims, wherein the inorganic material comprises, or even consists of, one or more materials selected from the group consisting of metals, metalloids, metal oxides, metalloid oxides, ceramics and mixtures thereof.

7. The liquid composition according to any of the preceding claims, wherein the first population of water-insoluble particles have an average particle size of at most 50 micrometer.

8. The liquid composition according to any of the preceding claims, wherein the total amount of the first population of water-insoluble particles is at least 5% (w/w) relative to the total weight of the composition.

9. The liquid composition according to any of the preceding claims, wherein the first population of water-insoluble particles are insoluble in the lipophilic, continuous liquid phase.

10. The liquid composition according any of the preceding claims, wherein the composition is a paint or coating composition.

11. The liquid composition according to claim 10, containing a total amount of the first population of water-insoluble particles of at least 40% (w/w) and having a yield value of at most 30 Pa.

12. The liquid composition according to claim 10 or 11, containing a total amount of the first population of water-insoluble particles of at least 40% (w/w) and having a plastic viscosity of at most 200 Pa*s measured as detailed in the description.

13. The liquid composition according to any of the preceding claims, wherein the total amount of the pphe emulsifier is at least 0.2% (w/w) relative to the total weight of the composition.

**14.** A method of producing the liquid composition according to any of the preceding claims containing water-insoluble particles, which method comprises the steps of

a) providing the ingredients of the liquid composition including a pphe emulsifier, a first population of water-insoluble particles and additional ingredients including a lipophilic liquid phase, and

b) combining the pphe emulsifier, the first population of water-insoluble particles and the additional ingredients, so as to form the liquid composition containing water-insoluble particles.

**15.** A paint or coating composition in the form of an emulsion comprising a continuous aqueous phase and a population of type 1 droplets containing:

- a lipophilic liquid phase comprising a binder,
- pphe emulsifier, and
- total amount of a first population of water-insoluble particles of at least 1% (w/w).

**16.** A dry composition in the form of a dry powder or dry pellets, said dry composition comprising a first population of water-insoluble particles of at least 1% (w/w), and a polyol poly(hydroxy fatty acid) ester emulsifier (pphe emulsifier), and wherein at least a portion of said pphe emulsifier is located on the surface of at least some of the water-insoluble particles of the first population.

**17.** Use of a pphe emulsifier as defined in any of the claims 1-12 as an ingredient to obtain one or more effects selected from the group consisting of:

- decreasing the yield value,
- decreasing the shear stress,
- decreasing the plastic viscosity,
- reducing the formation of pin holes,
- reducing the energy consumption during production, and
- increasing the concentration of water-insoluble particles without compromising the flow properties,

of a liquid or paste-like composition comprising water-insoluble particles and a lipophilic, continuous liquid phase.

**Patentansprüche**

**1.** Flüssige Zusammensetzung, umfassend eine lipophile kontinuierliche flüssige Phase, eine Gesamtmenge einer ersten Population wasserunlöslicher Teilchen von mindestens 1 % (Gew./Gew.) und einen Polyol-Poly(hydroxyfettsäure)ester-Emulgator (PPhe-Emulgator), wobei die wasserunlöslichen Teilchen in der lipophilen flüssigen Phase dispergiert sind.

**2.** Flüssige Zusammensetzung nach Anspruch 1, wobei der Polyol-Poly(hydroxyfettsäure)ester zwei Poly(hydroxyfettsäure)n, drei Poly(hydroxyfettsäure)n oder vier Poly(hydroxyfettsäure)n enthält.

**3.** Flüssige Zusammensetzung nach Anspruch 1 oder 2, wobei der PPhe-Emulgator Polyglycerin-Polyricinoleat ist, das aus Glycerin und Ricinolsäure hergestellt ist.

**4.** Flüssige Zusammensetzung nach einem der vorhergehenden Ansprüche, wobei die erste Population wasserunlöslicher Teilchen hydrophile wasserunlösliche Teilchen mit einem Kontaktwinkel relativ zu einem Tropfen demineralisierten Wassers von weniger als 90 Grad sind.

**5.** Flüssige Zusammensetzung nach einem der vorhergehenden Ansprüche, wobei die erste Population wasserunlöslicher Teilchen anorganisches Material umfasst oder sogar aus diesem besteht.

**6.** Flüssige Zusammensetzung nach einem der vorhergehenden Ansprüche, wobei das anorganische Material ein oder mehrere Materialien, ausgewählt aus der Gruppe bestehend aus Metallen, Metalloiden, Metalloxiden, Metalloidoxiden, Keramiken und Mischungen davon umfasst oder sogar aus diesen besteht.

**7.** Flüssige Zusammensetzung nach einem der vorhergehenden Ansprüche, wobei die erste Population wasserunlöslicher Teilchen eine durchschnittliche Teilchengröße von höchstens 50 Mikrometer hat.

**8.** Flüssige Zusammensetzung nach einem der vorhergehenden Ansprüche, wobei die Gesamtmenge der ersten Population wasserunlöslicher Teilchen mindestens 5 % (Gew./Gew.), bezogen auf das Gesamtgewicht der Zusammensetzung, beträgt.

**9.** Flüssige Zusammensetzung nach einem der vorhergehenden Ansprüche, wobei die erste Population wasserunlöslicher Teilchen in der lipophilen, kontinuierlichen flüssigen Phase unlöslich ist.

**10.** Flüssige Zusammensetzung nach einem der vorhergehenden Ansprüche, wobei die Zusammensetzung eine Farb- oder Beschichtungszusammensetzung ist.

**11.** Flüssige Zusammensetzung nach Anspruch 10, die eine Gesamtmenge der ersten Population wasserunlöslicher Teilchen von mindestens 40% (Gew./Gew.) enthält und einen Fließwert von höchstens 30 Pa aufweist.

**12.** Flüssige Zusammensetzung nach Anspruch 10 oder 11, die eine Gesamtmenge der ersten Population wasserunlöslicher Teilchen von mindestens 40% (Gew./Gew.) enthält und eine plastische Viskosität von höchstens 200 Pa*s, gemessen wie in der Beschreibung ausgeführt, aufweist.

**13.** Flüssige Zusammensetzung nach einem der vorhergehenden Ansprüche, wobei die Gesamtmenge des PPhe-Emulgators mindestens 0,2 % (Gew./Gew.), bezogen auf das Gesamtgewicht der Zusammensetzung, beträgt.

**14.** Verfahren zur Herstellung der flüssigen Zusammensetzung nach einem der vorhergehenden Ansprüche, die wasserunlösliche Teilchen enthält, wobei das Verfahren die folgenden Schritte umfasst:

a) Bereitstellen der Bestandteile der flüssigen Zusammensetzung, umfassend einen PPhe-Emulgator, eine ersten Population wasserunlöslicher Teilchen und zusätzliche Bestandteile, umfassend eine lipophile flüssige Phase, und
b) Kombinieren des PPhe-Emulgators, der ersten Population wasserunlöslicher Teilchen und der zusätzlichen Bestandteile, um die flüssige Zusammensetzung zu bilden, die wasserunlösliche Teilchen enthält.

**15.** Farb- oder Beschichtungszusammensetzung in Gestalt einer Emulsion umfassend eine kontinuierliche wässrige Phase und eine Population von Tröpfchen des Typs 1 enthaltend:

- eine lipophile flüssige Phase umfassend ein Bindemittel,
- PPhe Emulgator, und
- Gesamtmenge einer ersten Population wasserunlöslicher Teilchen von mindestens 1 % (Gew./Gew.).

**16.** Trockene Zusammensetzung in Gestalt eines trockenen Pulvers oder trockener Pellets, wobei die trockene Zusammensetzung eine ersten Population wasserunlöslicher Teilchen von mindestens 1 % (Gew./Gew.) und einen Polyol-Poly(hydroxyfettsäure)ester-Emulgator (PPhe-Emulgator) umfasst, und wobei sich zumindest ein Teil des PPhe-Emulgators auf der Oberfläche von zumindest einigen der wasserunlöslichen Teilchen der ersten Population befindet.

**17.** Verwendung eines wie in einem der Ansprüche 1-12 beschriebenen PPhe-Emulgators als Bestandteil, um eine oder mehrere Effekte zu erzielen, die ausgewählt sind aus der Gruppe bestehend aus:

- Herabsetzen der Fließgrenze,
- Herabsetzen der Scherspannung,
- Herabsetzen der plastischen Viskosität,
- Reduzieren der Bildung von Gasblasen,
- Reduzieren des Energieverbrauchs bei der Herstellung und
- Erhöhen der Konzentration wasserunlöslicher Teilchen ohne Beeinträchtigen der Fließeigenschaften,

einer flüssigen oder Pasten-artigen Zusammensetzung, die wasserunlösliche Teilchen und eine lipophile, kontinuierliche flüssige Phase umfasst.

## Revendications

**1.** Composition liquide comprenant une phase liquide continue lipophile, une quantité totale d'une première population de particules insolubles dans l'eau d'au moins 1 % (p/p), et un émulsifiant ester de poly(hydroxy acide gras) et de polyol (émulsifiant pphe), lesdites particules insolubles dans l'eau sont dispersées dans la phase liquide lipophile.

**2.** Composition liquide selon la revendication 1, dans laquelle l'ester de poly(hydroxy acide gras) et de polyol contient deux poly(hydroxy acides gras), trois poly(hydroxy acides gras), ou quatre poly(hydroxy acides gras).

**3.** Composition liquide selon la revendication 1 ou 2, dans laquelle l'émulsifiant pphe est le polyricinoléate de polyglycérol, qui est préparé à partir de glycérol et d'acide ricinoléique.

**4.** Composition liquide selon l'une quelconque des revendications précédentes, dans laquelle la première population de particules insolubles dans l'eau sont des particules insolubles dans l'eau hydrophiles ayant un angle de contact par rapport à une gouttelette d'eau déminéralisée inférieur à 90 degrés.

**5.** Composition liquide selon l'une quelconque des revendications précédentes, dans laquelle la première population de particules insolubles dans l'eau comprend, voire consiste en, un matériau inorganique.

**6.** Composition liquide selon l'une quelconque des revendications précédentes, dans laquelle le matériau inorganique comprend, voire consiste en, un ou plusieurs matériaux sélectionnés dans le groupe consistant en des métaux, des métalloïdes, des oxydes de métaux, des oxydes de métalloïdes, des céramiques et des mélanges de ceux-ci.

7. Composition liquide selon l'une quelconque des revendications précédentes, dans laquelle la première population de particules insolubles dans l'eau a une taille moyenne des particules d'au plus 50 micromètres.

8. Composition liquide selon l'une quelconque des revendications précédentes, dans laquelle la quantité totale de la première population de particules insolubles dans l'eau est d'au moins 5 % (p/p) par rapport au poids total de la composition.

9. Composition liquide selon l'une quelconque des revendications précédentes, dans laquelle la première population de particules insolubles dans l'eau sont insolubles dans la phase liquide continue lipophile.

10. Composition liquide selon l'une quelconque des revendications précédentes, dans laquelle la composition est une composition de peinture ou de revêtement.

11. Composition liquide selon la revendication 10, contenant une quantité totale de la première population de particules insolubles dans l'eau d'au moins 40 % (p/p) et ayant une limite d'écoulement d'au plus 30 Pa.

12. Composition liquide selon la revendication 10 ou 11, contenant une quantité totale de la première population de particules insolubles dans l'eau d'au moins 40 % (p/p) et ayant une viscosité plastique d'au plus 200 Pa.s mesurée tel que détaillé dans la description.

13. Composition liquide selon l'une quelconque des revendications précédentes, dans laquelle la quantité totale de l'émulsifiant de pphe est d'au moins 0,2 % (p/p) par rapport au poids total de la composition.

14. Procédé de production de la composition liquide selon l'une quelconque des revendications précédentes contenant des particules insolubles, le procédé comprenant les étapes suivantes

   a) fourniture des ingrédients de la composition liquide incluant un émulsifiant pphe, une première population de particules insolubles dans l'eau et des ingrédients supplémentaires incluant une phase liquide lipophile, et
   b) la combinaison de l'émulsifiant pphe, de la première population de particules insolubles dans l'eau et des ingrédients supplémentaires, pour former la composition liquide contenant des particules insolubles dans l'eau.

15. Composition de peinture ou de revêtement sous la forme d'une émulsion comprenant une phase aqueuse continue et une population de gouttelettes de type 1 contenant :

   - une phase liquide lipophile comprenant un liant,
   - un émulsifiant pphe, et
   - une quantité totale d'une première population de particules insolubles dans l'eau d'au moins 1 % (p/p).

16. Composition sèche sous la forme d'une poudre sèche ou de granules secs, ladite composition sèche comprenant une première population de particules insolubles dans l'eau d'au moins 1 % (p/p), et un émulsifiant ester de poly (hydroxy acide gras) et de polyol (émulsifiant pphe), et dans laquelle au moins une partie dudit émulsifiant pphe se trouve sur la surface d'au moins une partie des particules insolubles dans l'eau de la première population.

17. Utilisation d'un émulsifiant pphe selon l'une quelconque des revendications 1 à 12 en tant qu'ingrédient pour obtenir un ou plusieurs effets sélectionnés dans le groupe consistant en :

   - la diminution de la limite d'écoulement,
   - la diminution de la contrainte de cisaillement,
   - la diminution de la viscosité plastique,
   - la réduction de la formation de trous d'aiguilles,
   - la réduction de la consommation d'énergie durant la production, et
   - l'augmentation de la concentration de particules insolubles dans l'eau sans compromettre les propriétés d'écoulement,

d'une composition liquide ou de type-pâte comprenant des particules insolubles dans l'eau et une phase liquide continue lipophile.

# Fig. 1

# Fig. 2

# Fig. 3

# Fig. 4

# Fig. 5

# Fig. 6

# Fig. 7

# Fig. 8

# Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010042462 A1
- US 5977211 A
- DE 102008007713 A1
- US 2009118397 A1
- US 5071479 A
- US 6780910 B2

**Non-patent literature cited in the description**

- **LEWIS.** Pigment Handbook. John Wiley & Son, 1988, vol. 1-3
- **G. SCHUSTER.** Emulgatoren für Lebensmittel. Springer Verlag, 1985